# EUROPEAN PATENT APPLICATION

(11) **EP 2 662 562 A1**
(43) Date of publication of application: **13.11.2013**
(21) Application number: 12167698.5
(22) Date of filing: 11.05.2012
(51) Int. Cl.: F03D 11/00, F03D 11/04, H01F 7/02, F16B 9/02

(54) **A mounting apparatus adapted to mount an object to a wind turbine**

(71) Applicant: Siemens Aktiengesellschaft, 80333 München (DE)
(72) Inventor: Nieuwenhuizen, John, 8700 Horsens (DK)

(57) **Abstract**

A mounting apparatus adapted to mount an object to a wind turbine is provided.

The mounting apparatus has a coupling device configured to, in a first state, couple a magnet and a magnetic flux guide so as to produce a magnetic flux through the magnetic flux guide and a section of the wind turbine for mounting the object to the section, and, in a second state, decouple the magnet and the magnetic flux guide for releasing the object from the section.

In this manner, objects can be easily mounted to and released from a wind turbine without reducing the structural integrity of the wind turbine.

Further, a wind turbine arrangement is provided.

## Description

The present invention relates to a mounting apparatus adapted to mount an object to a wind turbine.

Objects need to be mounted to wind turbines, in particular to towers of wind turbines. These objects include sensors, ladders, cables and elevator parts.

In the past, these objects were attached to a wind turbine by welding or bolting. This, however, may reduce the wind turbine's structural integrity. One way of avoiding this loss of structural integrity is addressed by EP 1623116 B1 suggesting a magnetic mounting apparatus to mount objects to a wind turbine tower.

It is one object of the present invention to provide an improved mounting apparatus. In particular, it is desired to provide a mounting apparatus which will allow easy release of the mounted object from the wind turbine.

Accordingly, a mounting apparatus adapted to mount an object to a wind turbine is provided, the mounting apparatus comprising a magnet, a magnetic flux guide and a coupling device. The coupling device is configured to, in a first state, couple the magnet and the magnetic flux guide so as to produce a magnetic flux through the magnetic flux guide and a section of the wind turbine for mounting the object to the section, and, in a second state, decouple the magnet and the magnetic flux guide for releasing the object from the section.

The idea of the present invention is to provide the magnet in a manner that will allow easy switching on and off of the magnetic force holding the mounting apparatus to the section of the wind turbine. Thereby, the mounting apparatus as well as the object may be released easily from the wind turbine section. By using a magnetic flux guide - rather than bringing the magnet into direct contact with the section of the wind turbine - the switching may be provided in a simple manner. In particular, the switching may take place inside the mounting apparatus. The mounting apparatus and the object may be permanently connected or releasably connectable to each other.

According to an embodiment, the magnet has poles, the poles being orientated in line with the magnetic flux guide in the first state and out of line with the magnetic flux guide in the second state. By having the poles orientated in line with the magnetic flux guide, the majority of the magnetic field lines of the magnet is guided through the magnetic flux guide and concentrated therein towards the section of the wind turbine. By having the poles orientated out of line with the magnetic flux guide, the majority of the magnetic field lines of the magnet does not pass through the magnetic flux guide and is not concentrated therein towards the section of the wind turbine. Preferably, "in line" means that the poles of the magnet are facing in the longitudinal direction of the magnetic flux guide. By "longitudinal direction" of the magnetic flux guide it is referred to the direction in which the magnetic flux guide has the same or substantially the same cross-section. Accordingly, "out of line" means that the poles are facing away or are parallel to the longitudinal direction.

According to a further embodiment, the coupling device supports the magnet for rotation of the magnet between the first and second state. In this manner, the poles of the magnet are moved in a direction substantially crosswise with respect to the magnetic field lines when changing the magnet from the first to the second state. This only requires a small force or moment.

According to a further embodiment, the coupling device supports the magnet linearly for linear movement between the first and the second state. Also, in this embodiment, the poles are moved in a direction crosswise with respect to the magnetic field lines when changing the magnet from the first to the second state. This only requires a small force or moment. The rotation and linear movement of the magnet may also be combined.

According to a further embodiment, the magnetic flux guide comprises a gap. The magnet is arranged inside the gap at least in the first state. In this manner, the magnet's magnetic flux may be coupled into the magnetic flux guide in an effective manner. When the magnet is arranged inside the gap, the magnet may substantially close the gap. The magnet should be spaced only a short-distance from the magnetic flux guide on each side. This distance may range from, for example, 0.1 mm to 10 cm, preferably 0.5 mm to 1 cm.

According to a further embodiment, the coupling device is configured to rotate the magnet inside the gap. A first rotational position of the magnet corresponds to the first state. A second rotational position of the magnet corresponds to the second state.

According to a further embodiment, the coupling device is configured to move the magnet linearly into and out of the gap. When the magnet is arranged inside the gap, this corresponds to the first state. When the magnet is arranged outside of the gap, this corresponds to the second state.

According to a further embodiment, the magnetic flux guide has a U-shape, the gap dividing the U-shape in the middle. Thereby, the same magnetic field strength is created at each end of the magnetic flux guide. Yet, the gap may also be arranged in a position other than the middle.

According to a further embodiment, the respective ends of the magnetic flux guide are configured to lie against the section of the wind turbine in the first state. The magnetic flux is introduced into the section of the wind turbine via the ends of the magnetic flux guide. The magnetic flux guide may comprise two or more ends.

According to a further embodiment, a lock is provided. The lock is configured to lock the coupling device in the first and/or the second state. In this manner, unintentional movement of the magnet with respect to the magnetic flux guide, thereby switching the magnetic holding force unintentionally on or off, is avoided. Locking may be achieved simply by preventing access to the magnet or the coupling device. In addition or alternatively, the lock may be formed as a protrusion, for example a pin, locking into a recess, for example a hole, in the first and the second state. In between the first and the second state, the protrusion is moved out of the recess to allow for movement, for example a rotation, of the magnet with respect to the magnetic flux guide.

According to a further embodiment, the lock is configured to be unlocked with a mechanical or electronic key. Thus, the lock may be configured so as to prevent people from tampering with the mounting apparatus. In this manner, only authorized personnel may be in a position to unlock the lock and thereby switch the magnetic holding force on or off. The electronic key may comprise a chip (for example on a card in the shape of a credit card) that will be read by a sensor of the lock. The lock will only unlock when the information on the chip corresponds to information stored on a memory of the lock.

According to a further embodiment, the lock is configured to transmit a turning motion of the mechanical key to the magnet for rotating the magnet between the first and second state. Thereby, a simple solution is achieved.

According to a further embodiment, a further magnet is provided, the further magnet being coupled to the magnetic flux guide so as to produce a magnetic flux through the magnetic flux guide and a section of the wind turbine in the first state, the further magnet being magnetically coupled to the magnet in the second state. Whereas the further magnet adds to the magnetic force of the magnet in the first state, thereby increasing the magnetic holding force of the mounting apparatus, the magnet magnetically neutralizes the further magnet in the second state. This neutralization may be achieved by respective opposite poles of the magnet and the further magnet facing each other in the second state. This "facing" may be achieved by a further flux guide guiding the magnetic flux of the magnet and the further magnet accordingly. Thus, "facing" is to be understood in a magnetic sense.

According to a further embodiment, a further flux guide having a U-shape is connected at its ends to an intermediate portion of the flux guide, the further magnet being arranged in line with the U-shape of the further flux guide. Thereby, the flux guide and the further flux guide may complement each other to form an A-shape.

According to a further embodiment, the magnet and/or further magnet comprises a permanent magnet. The permanent magnet may be a neodymium magnet or a samarium-cobalt magnet. The magnet and/or further magnet may comprise a plurality of permanent magnets. In addition or alternatively, the magnet and/or further magnet may comprise an electromagnet. Thus, the magnet and/or further magnet may comprise an electric coil. The flux guide and/or further flux guide comprises a material that is configured to be magnetized, for example iron.

Further, a wind turbine arrangement is provided. The wind turbine arrangement comprises a section of a wind turbine, an object and a mounting apparatus in accordance with the invention. In the first state, the apparatus mounts the object to the section of the wind turbine. In the second state, the apparatus releases the object from the section of the wind turbine.

The object may include a light, a ladder, a cable, a sensor or an antenna, preferably mounted inside or outside of a wind turbine tower. In particular, the object can be formed as a lightening detection system. Such systems monitor the current through the wind turbine, in particular through the tower of the wind turbine, when lightening strikes.

Further objects, features and advantages of the present invention will become apparent from the subsequent description and dependent claims, taken in conjunction with the accompanying drawings, in which:
Fig. 1 is a schematic diagram of an embodiment of a wind turbine arrangement;
Fig. 2 is a detail view from Fig. 1, the wind turbine arrangement being in a first state;
Fig. 3 shows the wind turbine arrangement of Fig. 2 in a second state;
Fig. 4 is a section view IV-IV from Fig. 2;
Fig. 5 is a schematic diagram of a further embodiment of a wind turbine arrangement, the wind turbine arrangement being in a first state;
Fig. 6 shows the wind turbine arrangement of Fig. 5 in the second state;
Fig. 7 is a schematic diagram of a further embodiment of a wind turbine arrangement, the wind turbine arrangement being in a first state; and
Fig. 8 shows the wind turbine arrangement of Fig. 7 in a second state.

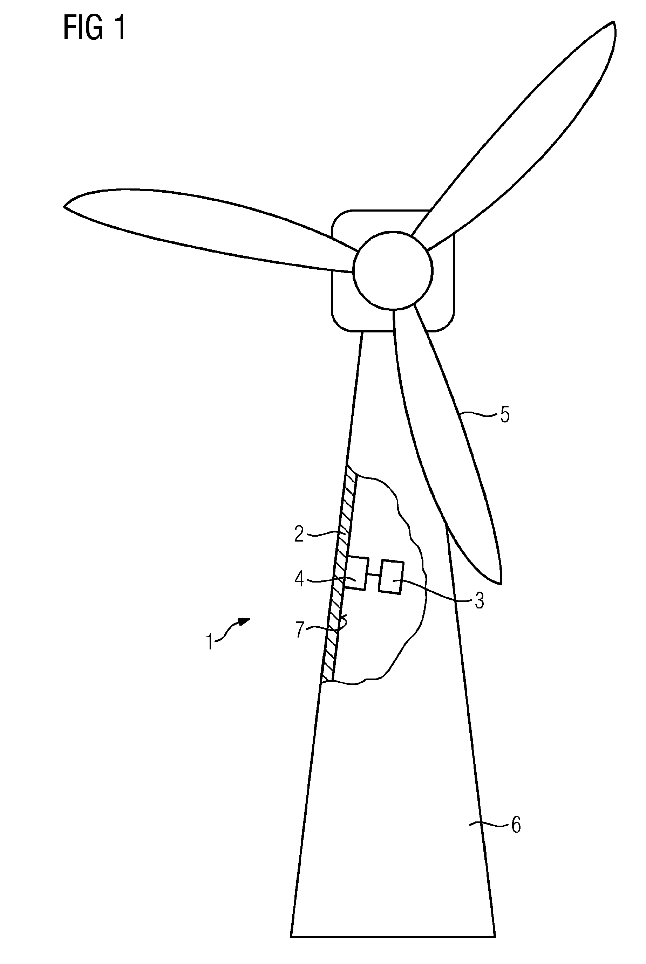

In the Figures, like reference numerals designate like or functionally equivalent elements, unless otherwise indicated. Fig. 1 shows a schematic diagram of an embodiment of a wind turbine arrangement 1.

The wind turbine arrangement 1 comprises a section 2, an object 3 and a mounting apparatus 4 mounting the object 3 to the section 2.

The section 2 is a part of a wind turbine 5. In particular, the section 2 may form a part of a wall of a tower 6 of the wind turbine 5. The section 2 comprises a material, for example iron, adapted to be magnetized. For example, the section 2 can be made of steel, which comprises iron.

The object 3 may be a tower component, like for example a ladder, a cable, in particular a power cable, an illumination means, in particular a light fitting, a platform or an elevator component.

The object 3 as well as the mounting apparatus 4 may be arranged inside the tower 6 of the wind turbine 5. The mounting apparatus 4 may connect the object 3 to an inner surface 7 of the section 2. Alternatively, the object 3 is mounted via the mounting apparatus to the outside of the tower 6 (not shown).

The object 3 may be connected to the mounting apparatus 4 in numerous ways. For example, the object 3 may be welded, fastened by bolts or other means of connection to the mounting apparatus 4. In particular, the mounting apparatus 4 may also be formed in one piece with the object 3.

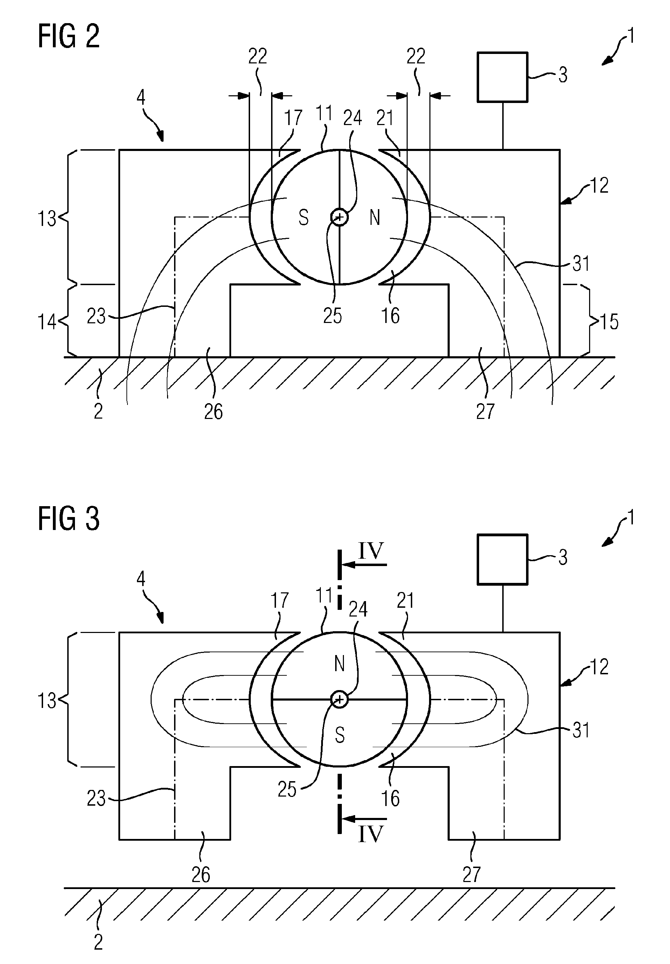

Fig. 2 shows a detail view from Fig. 1.

The mounting apparatus 4 comprises a magnet 11 having two opposite poles N, S. The magnet 11 is formed as a neodymium magnet or samarium-cobalt magnet, for example. According to the embodiment of Fig. 2, the magnet 11 has a round cross-section. The magnet's polarity divides the section in half, that is the north pole N and the south pole S.

Further, the mounting apparatus 4 comprises a magnetic flux guide 12. The magnetic flux guide 12 is formed in a U-shape with an intermediate portion 13 and two leg portions 14, 15. A gap 16 divides the intermediate portion 13 in half. The ends 17, 21 defining the gap 16 may each be formed with a concave shape corresponding to the cross-section of the magnet 11. A distance 22 between the magnet 11 and a respective end 17, 21 of the magnetic flux guide 12 may range between 1 and 5 mm, for example. The intermediate portion 13 and the leg portions 14, 15 may each have the same cross-section, thus defining a longitudinal direction 23 of the magnetic flux guide 12. The magnetic flux guide 12 comprises a material, for example iron, adapted to be magnetized. The magnetic flux guide 12 may thus be made of steel, which comprises iron.

Further, the mounting apparatus 4 comprises a coupling device 24. According to the embodiment of Fig. 2, the coupling device 24 is formed as a shaft supporting the magnet 11 rotatably. The shaft 24 may in turn be connected to an electric motor or manual lever by which the magnet 11 may be rotated about an axis 25 of the shaft 24.

Fig. 2 shows the mounting apparatus 4 in a first state. In the first state, the magnet 11 is rotated by means of the shaft 24 such that the south pole S faces the end 17, i.e. in the longitudinal direction 23, and the north pole N faces towards the end 21, i.e. also in the longitudinal direction 23. The poles N, S are orientated in line with the magnetic flux guide 12. Therefore, the magnet 11 is coupled with the magnetic flux guide 12. Also, respective ends 26, 27 of the leg portions 14, 15 lie against the section 2 of the tower 6. As a result, magnetic flux 31 flows from the north pole N through the end 21 into the intermediate portion 13, through the leg portion 15, thereafter through the section 2, into the leg portion 14, through the intermediate portion 13 and through the end 17 to the south pole S of the magnet 11. Thus, the mounting apparatus 4, and therefore also the object 3, is held fixedly by magnetic force against the section 2. Fig. 3 shows the wind turbine arrangement 1 of Figs. 1 and 2 in a second state.

In the second state, the magnet 11 has been turned by operation of the coupling device 24, i.e. turning of the shaft 24, around the axis 25 such that the north pole N and the south pole S are facing away from the ends 17, 21 respectively. Thus, the north pole N and the south pole S are orientated out of line with the magnetic flux guide 12. The magnet 11 and the magnetic flux guide 11 are hence decoupled. As a result, the magnetic flux 31 only flows within the intermediate portion 13 of the magnetic flux guide 12 and substantially not through the ends 26 and 27 of the flux guide 12 into the section 2. No magnetic force holds the mounting apparatus 4, and therefore the object 3, to the section 2. Thus, the object 3 is being released from the section 2.

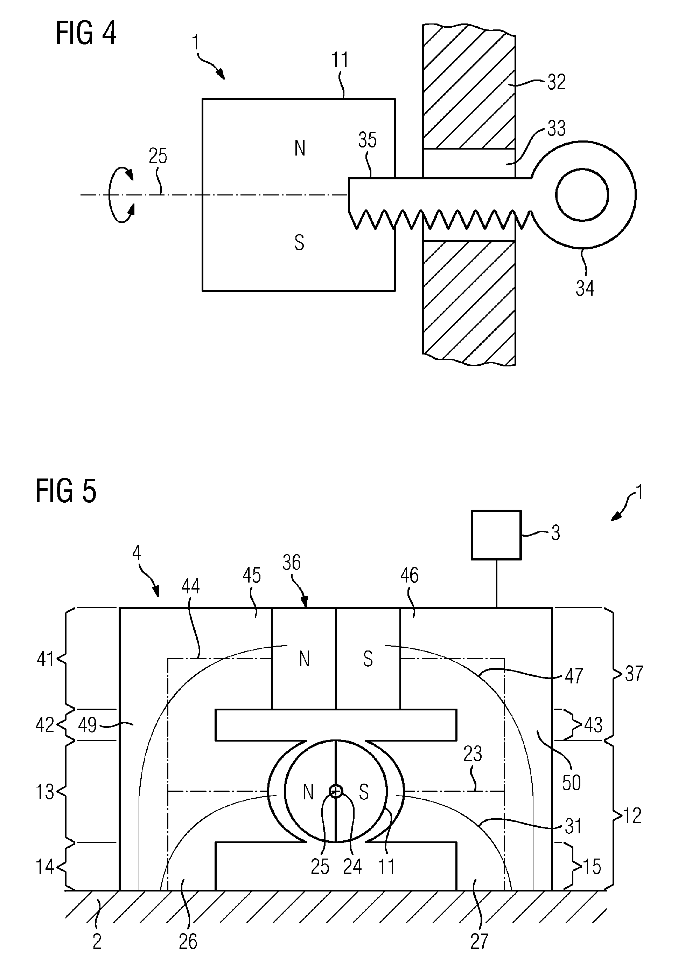

Fig. 4 shows a section view IV-IV from Fig. 3. However, the embodiment of Fig. 4 differs in some aspects from the embodiment of Figs. 1 to 3.

The mounting apparatus 4 comprises a casing 32 which prevents access to the inside of the mounting apparatus 4. The inside of the mounting device 4 comprises the magnet 11, in particular. The casing 32 has a lock 33, which may be operated by a mechanical key 34. The (correct) mechanical key 34 is allowed to pass through the lock 33 and engage at its one end 35 the magnet 11. Thus, by turning the key 34 about its axis, which corresponds to the axis 25 in the example of Fig. 4, the magnet 11 may be turned about its axis 25. Thereby, the first and second state of the mounting apparatus 4 may be obtained. In this case, unlocking of the lock 33 is simply achieved by pushing the key 34 through the lock 33. Other locks, in particular such locks requiring an electronic key to be unlocked, may be used instead. The lock 33 prevents inadvertently changing the state of the mounting apparatus 4. In this case, the key 34 also forms the coupling device 24.

Fig. 5 shows a schematic diagram of a wind turbine arrangement 1 according to a further embodiment.

The embodiment of Fig. 5 differs from the embodiment of Fig. 1-3 in that according to the embodiment of Fig. 5 the mounting apparatus 4 comprises a further magnet 36 having a north pole N and a south pole S as well as a further flux guide 37. Again, the flux guide 37 is, for example, U-shaped, comprising an intermediate portion 41 as well as leg portions 42, 43. The leg portions 42, 43 connect at ends 49, 50 to the intermediate portion 13 of the flux guide 12 respectively. The flux guide 12 and the further flux guide 37 may be formed in a single piece. Thus, they may form an A-shape together. The intermediated portion 41 of the further flux guide 37 has the magnet 36 arranged in its middle. The further magnet 36 may be formed in one piece with the intermediate portion 41. The further magnet 36 is fixedly arranged so that the poles N, S are orientated in line with a longitudinal direction 44 of the further flux guide 37 at all times. In other words, the north pole N faces towards an end 45 of the intermediate portion 44, and the south pole S faces towards an end 46 of the intermediate portion 41.

In the first state, as illustrated in Fig. 5, the poles N, S of the magnet 11 and the further magnet 36 are arranged on the same side respectively, thus magnetic flux lines 47 of the further magnet 36 add to the flux lines 31 of the magnet 11 through the ends 26, 27 of the magnetic flux guide 12 and through the section 2 of the tower 6. As a result, a stronger magnetic field, and thus a stronger holding force holding the mounting apparatus 4, and therefore the object 3, to the section 2 may be obtained.

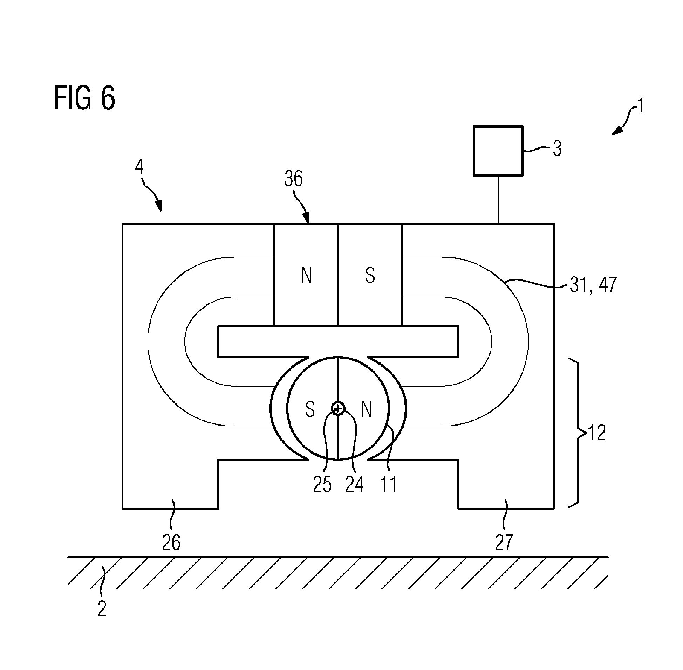

Fig. 6 shows the wind turbine arrangement 1 of Fig. 5 in the second state.

By rotating the magnet 11 around the axis 25 into the second state, opposite poles N, S of the magnet 11 and the further magnet 36 are arranged on the same side. The result is that the magnet 11 and the further magnet 36 are now magnetically coupled. The magnetic flux 31, 47 now flows from the magnet 11 to the further magnet 36 and vice versa. No relevant magnetic flux flows through the ends 26, 27 of the magnetic flux guide 12. As a result, no holding force is exerted by the mounting apparatus 4 on the section 2, and thus the object 3 is released.

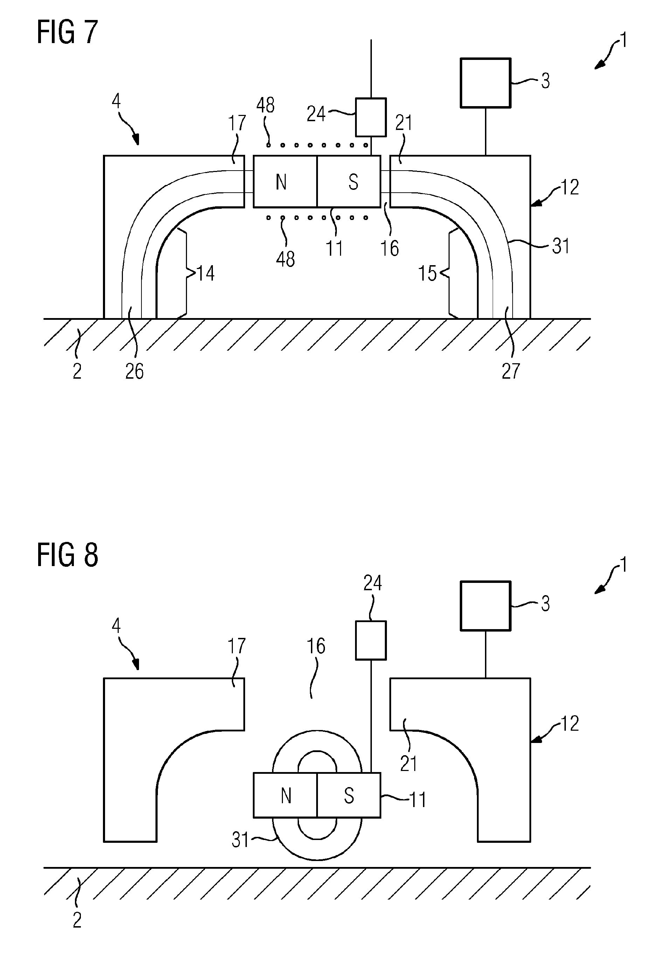

Figs. 7 and 8 illustrate another embodiment of a wind turbine arrangement 1 in the first and second state, respectively.

The embodiment of Figs. 7 and 8 differs from the embodiment of Figs. 2 and 3 in that the magnet 11 is formed as a rectangular bar. Further, the coupling device 24 is adapted to move the magnet 11 into the gap 16 (in the first state) and out of the gate 16 (in the second state). This movement is a linear movement. To this end, the coupling device 24 may be formed as a linear actuator, for example a hydraulic or pneumatic piston/cylinder arrangement.

When the magnet 11 is arranged inside the gap 16, the poles N, S face the ends 17, 21 of the magnetic flux guide 12, thereby producing magnetic flux 31 through the ends 26, 27 of the magnetic flux guide 12 and through the section 2 of the tower 6. Thereby, a holding force is produced which fixedly holds the mounting apparatus 4, and thereby the object 3, to the section 2.

To release the object 3, the coupling device 24 moves the magnet 11 out of the gap 16. Thus, the magnetic flux 31 substantially does not flow through the magnetic flux guide 12 any more. No holding force is produced by the mounting apparatus 4 and the object 3 is released.

Fig. 7 also illustrates that instead or in addition to the permanent magnet 11, an electric coil 48 may be used to produce or enhance the magnetic field produced by the magnet.

Although the present invention has been described in accordance with preferred embodiments, it is obvious for a person skilled in the art that modifications are possible in all embodiments.

For example, the mounting apparatus 4, in particular the magnetic flux guide 12, may comprise a means to compensate for the curvature of the surface 7 of the section 2. Also, the means may be adjustable to different curvatures, which is one way of allowing the mounting apparatus 4 to be used at different heights of the tower 6 having a conical shape. Such means may include one or more rotatable feet or a bendable structure.

## Claims

1. A mounting apparatus (4) adapted to mount an object (3) to a wind turbine (5), the mounting apparatus (4) comprising:
a magnet (11),
a magnetic flux guide (12), and
a coupling device (24) configured to, in a first state, couple the magnet (11) and the magnetic flux guide (12) so as to produce a magnetic flux (31) through the magnetic flux guide (12) and a section (2) of the wind turbine (5) for mounting the object (3) to the section (2) and, in a second state, decouple the magnet (11) and the magnetic flux guide (12) for releasing the object (3) from the section (2).

2. The mounting apparatus according to claim 1, wherein the magnet (11) has poles (N, S), the poles (N, S) being orientated in line with the magnetic flux guide (12) in the first state and out of line with the magnetic flux guide (12) in the second state.

3. The mounting apparatus according to claim 2, wherein the coupling device (24) supports the magnet (11) rotatably for rotation of the magnet (11) between the first and second state.

4. The apparatus according to claim 2, wherein the coupling device (24) supports the magnet (11) linearly for linear movement between the first and second state.

5. The mounting apparatus according to one of claims 1 to 4, wherein the magnetic flux guide (12) comprises a gap (16), the magnet (11) being arranged inside the gap (16) at least in the first state.

6. The mounting apparatus according to claim 5, wherein the coupling device (24) is configured to rotate the magnet (11) inside the gap (16).

7. The mounting apparatus according to claim 5, wherein the coupling device (24) is configured to move the magnet (11) linearly into and out of the gap (16).

8. The mounting apparatus according to one of claims 5 to 7, wherein the magnetic flux guide (12) has a U-shape, the gap (16) dividing the U-shape in the middle.

9. The mounting apparatus according to one of claims 1 to 8, wherein respective ends (26, 27) of the magnetic flux guide (12) are configured to lie against the section (2) of the wind turbine (5) in the first state.

10. The mounting apparatus according to one of claims 1 to 9, wherein a lock (33) is provided, the lock (33) being configured to lock the coupling device (24) in the first and/or in the second state.

11. The mounting apparatus according to claim 10, wherein the lock (33) is configured to be unlocked with a mechanical or an electronic key (34).

12. The mounting apparatus according to claim 11, wherein the lock (33) is configured to transmit a turning motion of the mechanical key (34) to the magnet (11) for rotating the magnet (11) between the first and second state.

13. The mounting apparatus according to one of claims 1 to 12, wherein a further magnet (36) is provided, the further magnet (36) being coupled to the magnetic flux guide (12) so as to produce a magnetic flux (47) through the magnetic flux guide (12) and the section (2) of the wind turbine (5) in the first state, the further magnet (36) being magnetically coupled to the magnet (11) in the second state.

14. The mounting apparatus according to claim 13, wherein a further magnetic flux guide (37) having a U-shape is connected at its ends (49, 50) to an intermediate portion (13) of the magnetic flux guide (12), the further magnet (36) being arranged in line with the U-shape of the further magnetic flux guide (37).

15. A wind turbine arrangement (1) comprising:
a wind turbine tower (6),
an object (3) and
a mounting apparatus (4) according to one of claims 1 to 14, the object (3) being mounted via the mounting apparatus (4) to the inside or outside of the wind turbine tower (6).
